# EUROPÄISCHE PATENTSCHRIFT

(11) **EP 1 175 664 B1**
(45) Veröffentlichungstag und Bekanntmachung des Hinweises auf die Patenterteilung: **30.10.2002**
(21) Anmeldenummer: 99916739.8
(22) Anmeldetag: 03.05.1999
(51) Int. Cl.: G07F 7/02

(54) **VERFAHREN ZUM VERTEILEN VON WERTCODES**
METHOD OF ASSIGNING VALUE CODES
PROCEDE POUR DISTRIBUER DES CODES DE VALEUR

(43) Veröffentlichungstag der Anmeldung: 30.01.2002
(73) Patentinhaber: Swisscom Mobile AG, 3050 Bern (CH)
(72) Erfinder: BUSCH LAUPER, Karin, CH-3012 Bern (CH); ETIQUE, Pierre-Alain, CH-3032 Hinterkappelen (CH)
(74) Vertreter: BOVARD AG - Patentanwälte
(86) Internationale Anmeldenummer: CH9900182
(87) Internationale Veröffentlichungsnummer: WO00067210

(56) Entgegenhaltungen:
- EP-A- 0 827 119
- WO-A-96/38801
- WO-A-98/42173
- DE-A- 19 754 384
- GB-A- 2 305 393

## Beschreibung

Die vorliegende Erfindung betrifft ein Verfahren zum Verteilen von Wertcodes. Insbesondere betrifft die vorliegende Erfindung ein Verfahren zum Verteilen von Wertcodes, die eingelöst werden können, um Kredit für kostenpflichtige Dienstleistungen zu erhalten.

In der veröffentlichten Patentanmeldung EP 827 119 A1 wird ein Verfahren zum Aufladen oder Nachladen einer Datenträgerkarte mit einem Geldbetragswert beschrieben. Gemäss dem in EP 827 119 A1 beschriebenen Verfahren wird der Verkaufswert einer an sehr vielen öffentlichen Verkaufsstellen verfügbaren Wertkarte auf eine bestimmte Datenträgerkarte, insbesondere eine SIM-Karte, nach- oder aufgeladen, nachdem ein sich auf dieser Wertkarte befindender Wertcode an eine Dienstzentrale übertragen wurde.

Ein alternatives Verfahren zum Aufladen von Telefonkarten für Mobilfunktelefone mit einer Wertkarte wird in der Patentanmeldung EP 848 537 A1 beschrieben. Gemäss dem in EP 848 537 A1 beschriebenen Verfahren wird der Verkauf einer Telefonkarte, insbesondere eine SIM-Karte, in einer Kundendatenbank registriert und die vorausbezahlte Telefonkarte wird erst aktiviert, nachdem der Benutzer beim ersten abgehenden Anruf eine von ihm definierte Geheimnummer eingibt. Der Kreditbetrag wird nicht auf der Karte, sondern in einem Benutzerkonto gespeichert. Zum Wiederaufladen des Kartenkredits ruft der Benutzer eine Dienstnummer an und gibt zusätzlich zur Geheimnummer eine Kreditkartennummer oder einen Wertcode einer Wertkarte ein, worauf das Benutzerkonto mit einem nachzuladenden Betrag erhöht wird.

Wertkarten mit darauf gespeicherten Wertcodes, wie sie in der veröffentlichten Patentanmeldung EP 827 119 A1 beschrieben werden, können in unzähligen Anwendungsgebieten eingesetzt werden, da die auf einer Wertkarte gespeicherten Wertcodes nicht nur zum Aufladen von Telefonkarten oder anderen Datenträgerkarten mit einem Geldbetragswert verwendet werden können, sondern da diese Wertcodes eingelöst werden können, um Kredit für die unterschiedlichsten kostenpflichtigen Dienstleistungen zu erhalten. Allerdings hat die Verteilung von Wertcodes mittels einer Wertkarte als Träger den Nachteil, dass die Herstellung dieser Wertkarten mit Kosten verbunden ist, die nicht auf den Kunden übertragen werden können, da die Wertkarten sonst ihre Attraktivität bei den Kunden verlieren würden. Zusätzlich zu den Herstellungskosten ist auch der Vertrieb dieser Wertkarten fortwährend mit Kosten verbunden, da die Betreiber von öffentlich zugänglichen Verkaufsstellen diese Wertkarten nicht ohne Gewinnmarge verkaufen wollen. Typischerweise gehen diese Herstellungs- und Vertriebskosten zu Lasten des Dienstanbieters, beispielsweise der Betreiber eines Telekommunikationsnetzes, da die Kunden erwarten, dass sie die dem Geldbetragswert der Wertkarte entsprechende Dienstleistung erhalten. Schliesslich sollte auch erwähnt werden, dass die wegwerfbaren Wertkarten unnötig die Umwelt belasten.

Es ist eine Aufgabe dieser Erfindung, ein neues und besseres Verfahren zur Verteilung von Wertcodes vorzuschlagen, welches insbesondere nicht die oben beschriebenen Nachteile aufweist.

Gemäss der vorliegenden Erfindung wird dieses Ziel insbesondere durch die Elemente des unabhängigen Anspruchs erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass ein Wertcode, der generiert und in einer Datenbank eines Wertcodeausgebers gespeichert wird und der eingelöst werden kann um Kredit für kostenpflichtige Dienstleistungen zu erhalten, von einem Besteller durch Übermitteln von Bestellinformationen über einen Bestellkanal an den Wertcodeausgeber bestellt wird, wobei die Bestellinformationen mindestens einen Geldbetragswert umfassen, dass vor der Übermittlung des Wertcodes an den Besteller eine Liefernummer über einen Auslieferungskanal an den Besteller übermittelt und der Empfang der übermittelten Liefernummer vom Besteller durch Übermitteln von mindestens einem Teil der Lieferungsnummer über einen Bestätigungskanal an den Wertcodeausgeber bestätigt wird, dass ein Wertcode über den Auslieferungskanal an den Besteller übermittelt wird, wobei dieser übermittelte Wertcode in der genannten Datenbank mit dem genannten Geldbetragswert verknüpft ist, und dass dem Besteller ein Geldbetragswert, der mindestens dem mit dem bestätigten Wertcode verknüpften Geldbetragswert entspricht, belastet wird. Dieses Vorgehen hat den Vorteil, dass ein interessierter Kunde einen Wertcode direkt, ohne Zwischenhandel vom Wertcodeausgeber über einen Bestellkanal, beispielsweise ein Telekommunikationsnetz, zum Beispiel ein Mobilnetz oder ein Festnetz, zum Beispiel das öffentliche geschaltete Telefonnetz oder das Internet, bestellen und beziehen kann, wobei keine physikalischen Wertkarten produziert werden müssen, da auch der Auslieferungskanal ein Telekommunikationsnetz umfassen kann, welches beispielsweise dem Bestellkanal entspricht oder welches sich vom Bestellkanal unterscheidet, und wobei dies ohne Nachtarbeit während vierundzwanzig Stunden pro Tag möglich ist. Dieses Vorgehen hat den weiteren Vorteil, dass der Wertcodeausgeber eine Rückbestätigung des Bestellers erhält, bevor der Wertcode ausgeliefert wird, so dass beispielsweise keine inaktiven Wertcodes in der Datenbank verbleiben, die nie bestätigt wurden.

In einer bevorzugten Ausführungsvariante enthalten die genannten Bestellinformationen Angaben, wie die Kosten für einen bestellten Wertcode dem Besteller belastet werden können. Zum Beispiel enthalten sie eine Kreditkartennummer, eine Verrechnungsadresse, eine Bankverbindung mit einer Kontonummer oder eine Bestelleridentifizierung, beispielsweise zusammen mit einer Angabe über den gewünschten Zahlungsmodus.

In einer Ausführungsvariante enthalten die genannten Bestellinformationen Angaben, wie ein bestellter Wertcode dem Besteller übermittelt werden kann. Zum Beispiel enthalten sie Angaben zur Bestimmung des gewünschten Auslieferungskanals und Adressierungsinformationen betreffend diesen gewünschten Auslieferungskanal, beispielsweise eine Telefon- respektive Faxnummer, eine Postzustellungsadresse, eine E-Mail oder Netzwerkadresse oder eine Bestelleridentifizierung, auf Grund welcher ein Auslieferungsmodus und eine Auslieferungsadresse bestimmt werden können.

In einer bevorzugten Ausführungsvariante wird der Empfang des übermittelten Wertcodes durch Übermitteln von Bestätigungsinformationen, die beispielsweise mindestens einen Teil des Wertcodes enthalten, über einen Bestätigungskanal, der beispielsweise dem genannten Bestellkanal und/oder dem genannten Auslieferungskanal entspricht, an den Wertcodeausgeber bestätigt, bevor dem Besteller ein Geldbetragswert belastet wird.

In einer Ausführungsvariante wird der bestätigte Wertcode in der genannten Datenbank erst nach Erhalt der entsprechenden Bestätigung aktiviert. Dies hat den Vorteil, dass ein Wertcode erst dann verwendet werden kann, wenn der Besteller dessen Empfang bestätigt hat, so dass ein betreffender Besteller beispielsweise keinen Wertcode einlösen und später dessen Empfang bestreiten kann.

Vorzugsweise wird die oben genannte Liefernummer in der Datenbank mit dem Wertcode verknüpft bevor sie an den Besteller übermittelt wird. Dies hat den Vorteil, dass die Liefernummer vom Besteller mehrmals verwendet, das heisst zur Anforderung des Wertcodes an den Wertcodeausgeber übermittelt werden kann, und der Wertcode, der in der Datenbank mit der Liefemummer verknüpft ist, mehrmals an den Besteller übertragen werden kann, was vorteilhaft ist, wenn zum Beispiel die Bestätigung der Liefemummer misslingt, beispielsweise wegen eines technischen Problems oder wegen eines Eingabefehlers, wenn der Wertcode nicht erfolgreich an den Benutzer übermittelt wird, oder wenn der Besteller den bereits an ihn übermittelten Wertcode verloren hat, beispielsweise weil er ihn vergessen oder verlegt hat.

Nachfolgend wird eine Ausführung der vorliegenden Erfindung anhand eines Beispieles beschrieben. Das Beispiel der Ausführung wird durch folgende beigelegten Figuren illustriert:
Figur 1 a zeigt ein Flussdiagramm, welches schematisch Schritte des Verfahrens zum Verteilen von Wertcodes illustriert.
Figur 1b zeigt ein Flussdiagramm, das nur als Hintergrundinformation dargestellt ist, welches schematisch Schritte zum Verteilen von Wertcodes illustriert.
Figur 1c zeigt ein Flussdiagramm, welches schematisch die Schritte des erfindungsgemässen Verfahrens zum Verteilen von Wertcodes illustriert.
Figur 2 zeigt ein Blockdiagramm, welches schematisch einen Wertcodeausgeber illustriert, der mit verschiedenen Kommunikationskanälen sowie mit einer Datenbank und einer Clearing-Stelle verbunden ist.

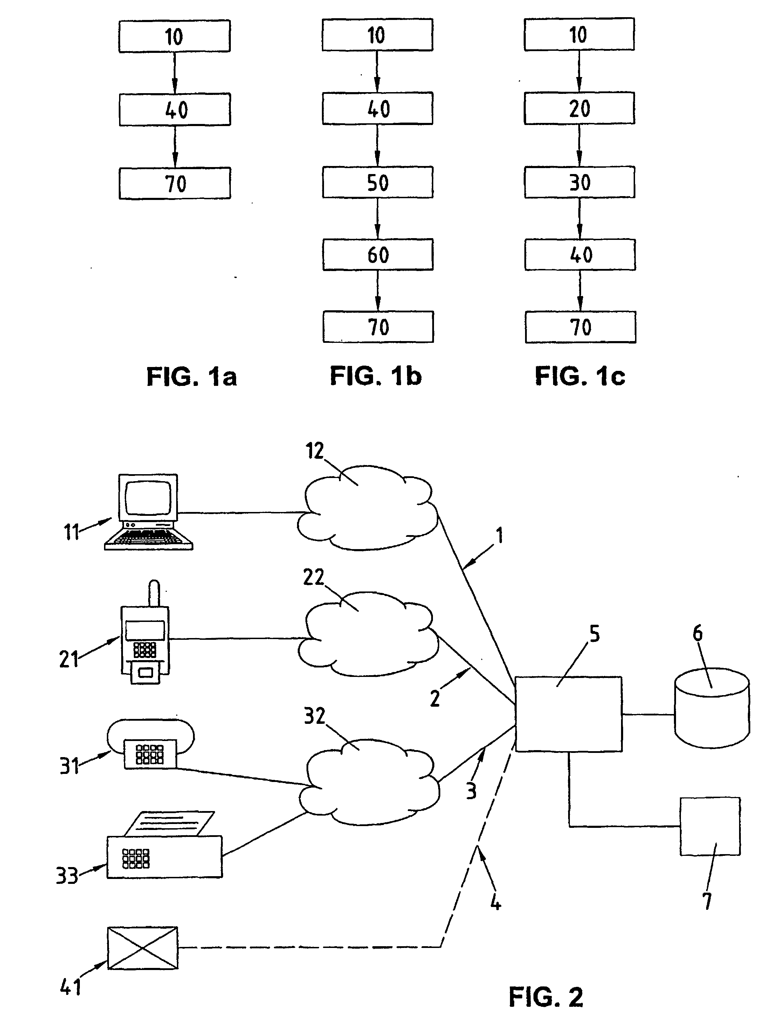

In der Figur 2 bezieht sich das Bezugszeichen 5 auf einen Wertcodeausgeber, der über die notwendige Infrastruktur, einschliesslich Hardwareund Softwarekomponenten sowie gegebenenfalls personelle Resourcen, verfügt, um im nachfolgend beschriebenen Verfahren die Funktion eines Wertcodeausgebers auszuführen, das heisst, um Bestellungen von Wertcodes entgegenzunehmen, um bestellte Wertcodes an den Besteller auszuliefern, und um gegebenenfalls in der betreffenden Variante des Verfahrens notwendige Bestätigungen entgegenzunehmen. Je nach Ausführungsvariante des erfindungsgemässen Verfahrens werden die Wertcodes zu einem geeigneten Zeitpunkt des Verfahrens generiert und in einer Datenbank 6 des Wertcodeausgebers abgespeichert. Die Wertcodes können von deren Besteller oder von deren Inhaber, an welchen der Besteller den Wertcode übertragen hat, eingelöst werden, um Kredit für kostenpflichtige Dienstleistungen zu erhalten, beispielsweise für Telefongespräche, für den Bezug von Gütern, wie beispielsweise Benzin von einer automatisierten Zapfsäule, für die Benützung von öffentlichen Verkehrsmitteln oder zum Bezug von elektronischem Bargeld für die Bezahlung von unterschiedlichsten Gütern und Dienstleistungen.

Der Wertcodeausgeber 5 umfasst beispielsweise einen oder mehrere handelsübliche Kommunikationsserver, die jeweils über die notwendigen Soft- und Hardwarekomponenten verfügen, um mit einem oder mehreren, gegebenenfalls verschiedenen Kommunikationskanälen 1 bis 4 verbunden zu werden. Diese Kommunikationskanäle 1 bis 4 werden im erfindungsgemässen Verfahren als Bestellkanäle, als Auslieferungskanäle und gegebenenfalls als Bestätigungskanäle benützt, wobei für die Bestellung, die Auslieferung und gegebenenfalls für die Bestätigung der gleiche oder ein unterschiedlicher Kommunikationskanal für die Kommunikation mit einem interessierten Besteller verwendet werden kann.

Der Kommunikationskanal 1 umfasst ein Telekommunikationsnetz 12, beispielsweise ein Festnetz, zum Beispiel ein LAN (Local Area Network) oder WAN (Wide Area Network), das öffentliche geschaltete Telefonnetz (PSTN, Public Switched Telephone Network undloder ISDN, Integrated Services Digital Network), oder das Internet, über welches mittels Kommunikationsendgeräten 11, beispielsweise ein dafür geeigneter. Personal Computer oder ein geeignetes öffentlich zugängliches Eingabeterminal, mit dem Wertcodeausgeber 5 kommuniziert werden kann. Die Kommunikation über den Kommunikationskanal 1 erfolgt beispielsweise mittels E-Mail oder mittels Datenaustausch über eine Internet-Seite (Web Page) oder mittels einem für den Datenaustausch geeigneten anderen Protokoll. Das Kommunikationsendgerät 11 umfasst beispielsweise geeignete programmierte Softwarefunktionen, um mit dem Wertcodeausgeber 5 zu kommunizieren und um automatisierbare Dateneingaben und Befehle, beispielsweise vom Besteller konfigurierbar, für den Besteller auszuführen.

Der Kommunikationskanal 2 umfasst ein mobiles Telekommunikationsnetz 22, beispielsweise ein GSM-, ein UMTS- oder ein anderes Mobilnetz, über welches mittels Mobilgeräten 21, beispielsweise ein dafür geeignetes Mobilfunktelefon oder ein geeigneter, kommunikationsfähiger Laptop- oder Palmtop-Computer, mit dem Wertcodeausgeber 5 kommuniziert werden kann. Die Kommunikation über den Kommunikationskanal 2 erfolgt beispielsweise mittels speziellen Kurzmeldungen, beispielsweise SMS- (Short Message Services) oder USSD- (Unstructured Supplementary Services Data) Meldungen oder über den Nutzkanal. Das Mobilgerät 21 umfasst beispielsweise geeignete programmierte Softwarefunktionen, die beispielsweise auf der mit dem Mobilgerät entfembar verbundenen SIM-Karte (Subscriber Identity Module) gespeichert sind, um mit dem Wertcodeausgeber 5 zu kommunizieren und um automatisierbare Dateneingaben und Befehle, beispielsweise vom Besteller konfigurierbar, für den Besteller auszuführen.

Der Kommunikationskanal 3 umfasst das öffentliche geschaltete Telefonnetz 32 (PSTN, Public Switched Telephone Network und/oder ISDN, Integrated Services Digital Network), über welches mittels Kommunikationsendgeräten, beispielsweise ein Telefon 31 oder ein Faxgerät 33, mit dem Wertcodeausgeber 5 kommuniziert werden kann. Für die Kommunikation mit einem Telefon 31 über den Kommunikationskanal 3 verfügt der Wertcodeausgeber 5 beispielsweise über programmierte Softwarefunktionen und geeignete Hardwareelemente, um mittels gesprochener Menuführung einen Besteller aufzufordern, Daten und Optionen über die Tastatur des Telefons 31 einzugeben, oder um Daten und Optionen vom Besteller mittels Spracherkennung entgegenzunehmen und um Informationen mittels automatisierter Sprache dem Besteller mitzuteilen.

Der Kommunikationskanal 4 umfasst ein Verteilungsnetz für die Kommunikation mittels konventioneller Papierpost 41, wobei der Wertcodeausgeber 5 beispielsweise programmierte Softwarefunktionen und geeignete Hardwareelemente umfasst, um die Papierpost 41 mit dem darin enthaltenen Wertcode zu produzieren.

Wie in den Figuren 1a, 1b und 1c dargestellt ist umfassen die Flussdiagramme a), b) und c) einen Schritt 10, in welchem von einem Besteller durch Übermitteln von Bestellinformationen über einen oben beschriebenen Bestellkanal 1 bis 4 an den Wertcodeausgeber ein Wertcode bestellt wird, wobei die Bestellinformationen mindestens einen Geldbetragswert umfassen. Die Bestellinformationen können auch Angaben darüber enthalten, wie die Kosten für einen bestellten Wertcode dem Besteller belastet werden können; zum Beispiel enthalten sie eine Kreditkartennummer, eine Verrechnungsadresse, eine Bankverbindung mit einer Kontonummer, oder eine Bestelleridentifizierung, beispielsweise zusammen mit einer Angabe über den gewünschten Zahlungsmodus. Eine Bestelleridentifizierung kann beispielsweise im Wertcodeausgeber 5 dazu verwendet werden, weitere Informationen betreffend den Besteller in einer Datenbank, beispielsweise eine Telekommunikationsnetzteilnehmerdatenbank eines Telekommunikationsnetzbetreibers, abzufragen. Die Bestellinformationen können auch Angaben darüber enthalten, wie ein bestellter Wertcode dem Besteller übermittelt werden kann, zum Beispiel enthalten sie Angaben zur Bestimmung des gewünschten Auslieferungskanals und Adressierungsinformationen betreffend diesen gewünschten Auslieferungskanal, beispielsweise eine Telefon- respektive Faxnummer, eine Postzustellungsadresse, eine E-Mail- oder Netzwerkadresse, oder eine Bestelleridentifizierung, auf Grund welcher vom Wertcodeausgeber 5, beispielsweise in einer Datenbank, insbesondere eine Telekommunikationsnetzteilnehmerdatenbank, ein Auslieferungsmodus und eine Auslieferungsadresse bestimmt werden kann.

Gemäss den Figuren 1a, 1b und 1c umfassen die Flussdiagramme a), b) und c) zudem auch einen Schritt 40, in welchem ein Wertcode über einen Auslieferungskanal 1 bis 4 an den Besteller übermittelt wird, wobei der Auslieferungskanal beispielsweise dem Bestellkanal entspricht oder gemäss in den Bestellinformationen enthaltenen Angaben gewählt wird, und wobei dieser übermittelte Wertcode in der Datenbank 6 des Wertcodeausgebers mit dem genannten Geldbetragswert verknüpft ist Je nach dem benützten Auslieferungskanal 1 bis 4 und dem benützten Kommunikationsendgerät 11, 21, 31, 33 wird der ausgelieferte Wertcode dem Besteller in unterschiedlicher Form kommuniziert und kann vom Besteller unterschiedlich eingelöst oder an eine andere Person zur Einlösung weitergegeben werden. In einem Personal Computer 11 kann der Wertcode auf dem Bildschirm dargestellt und in einem Speicher des Personal Computers 11 abgespeichert und beispielsweise durch geeignete Softwarefunktionen, mündlich oder in gedruckter Form zur Einlösung übermittelt oder an eine andere Person zur Einlösung weitergegeben werden. In einem Mobilgerät 21 kann der Wertcode auf der Anzeige dargestellt und in einem Speicher, beispielsweise auf der SIM-Karte des Mobilgeräts 21 abgespeichert und beispielsweise durch geeignete Softwarefunktionen oder mündlich zur Einlösung übermittelt oder an eine andere Person zur Einlösung weitergegeben werden. Durch ein Telefongerät 21 kann der Wertcode in gesprochener Sprache dem Besteller mitgeteilt und durch diesen beispielsweise durch Tonaufzeichnung oder schriftlich festgehalten und mündlich oder in schriftlicher Form zur Einlösung übermittelt oder an eine andere Person zur Einlösung weitergegeben werden. Durch ein Faxgerät 33 oder durch konventionelle Papierpost 41 kann der Wertcode dem Besteller in gedruckter Form mitgeteilt und durch diesen beispielsweise mündlich oder in schriftlicher Form zur Einlösung übermittelt oder an eine andere Person zur Einlösung weitergegeben werden. An dieser Stelle sollte festgehalten werden, dass durch die Tatsache, dass der Wertcode unpersönlich und auf eine andere Person übertragbar ist, die Anonymität der Person, die den Wertcode einlöst, gegeben ist.

Gemäss den Figuren 1a, 1b und 1c umfassen die Flussdiagramme a), b) und c) zudem auch einen Schritt 70, in welchem dem Besteller ein Geldbetragswert, der mindestens dem mit dem bestätigten Wertcode verknüpften Geldbetragswert entspricht, belastet wird, wobei die Belastung unter Berücksichtigung von in den Bestellinformationen enthaltenen diesbezüglichen Angaben gemacht wird. Die Belastung kann beispielsweise direkt durch den Wertcodeausgeber ausgeführt werden oder vom Wertcodeausgeber 5 durch Übermittlung der dazu nötigen Informationen, beispielsweise der Geldbetragswert und eine Bestelleridentifizierung, an eine Clearing-Stelle 7, oder ein Finanzinstitut 7, zur Ausführung der Belastung weitergeleitet werden.

Wie in der Figur 1b dargestellt ist, umfasst das Flussdiagramm b) zusätzlich zu den Schritten des Flussdiagramms a) einen Schritt 50, in welchem der Empfang des übermittelten Wertcodes durch Übermitteln von Bestätigungsinformationen über einen Bestätigungskanal 1 bis 4, der dem Bestellkanal und/oder dem Auslieferungskanal entsprechen kann, an den Wertcodeausgeber bestätigt wird, bevor dem Besteller ein Geldbetragswert belastet wird. Die Bestätigungsinformationen enthalten beispielsweise mindestens einen Teil des zu bestätigenden Wertcodes. Dank diesem zusätzlichen Schritt 50 kann in einem weiteren Schritt 60 des Flussdiagramms b) der bestätigte Wertcode in der genannten Datenbank erst nach Erhalt der entsprechenden Bestätigung aktiviert werden, womit garantiert wird, dass ein Wertcode nur eingelöst werden kann, wenn er vom Besteller bestätigt (empfangen) wurde.

Wie in der Figur 1c dargestellt ist, umfasst das Flussdiagramm c) des erfindungsgemässen Verfahrens zusätzlich zu den Schritten des Flussdiagramms a) einen Schritt 20, in welchem vor der Übermittlung des Wertcodes an den Besteller eine Liefernummer über einen Auslieferungskanal, der beispielsweise dem Bestellkanal entspricht oder gemäss in den Bestellinformationen enthaltenen Angaben gewählt wird, an den Besteller übermittelt wird. Gemäss dem weiteren Schritt 30 des Flussdiagramms c) wird der Empfang der übermittelten Liefemummer vom Besteller durch Übermitteln von mindestens einem Teil der Lieferungsnummer über einen Bestätigungskanal, der dem Bestellkanal und/oder dem Auslieferungskanal entsprechen kann, an den Wertcodeausgeber bestätigt bevor der Wertcode im Schritt 40 an den Besteller übermittelt wird. Dadurch erhält der Wertcodeausgeber 5 eine Rückbestätigung des Bestellers, bevor der Wertcode ausgeliefert wird, ohne dass beispielsweise inaktive Wertcodes in der Datenbank verbleiben, die nie bestätigt wurden. Vorteilhafterweise wird die oben genannte Liefemummer zudem in der Datenbank 6 mit dem betreffenden Wertcode verknüpft bevor sie im Schritt 20 an den Besteller übermittelt wird. Dies hat den Vorteil, dass die Liefernummer vom Besteller mehrmals verwendet, das heisst zur Anforderung des Wertcodes an den Wertcodeausgeber übermittelt werden kann, und der Wertcode, der in der Datenbank 6 mit der Liefernummer verknüpft ist, mehrmals an den Besteller übertragen werden kann, was vorteilhaft ist, wenn zum Beispiel die Bestätigung der Liefernummer misslingt, beispielsweise wegen eines technischen Problems oder wegen eines Eingabefehlers, wenn der Wertcode nicht erfolgreich an den Besteller übermittelt wird, oder wenn der Besteller den bereits an ihn übermittelten Wertcode verloren hat, beispielsweise weil er ihn vergessen oder verlegt hat.

Es wäre auch möglich, bestimmte Schritte gemäss den Flussdiagrammen b) oder c) miteinander zu kombinieren, beispielsweise könnte der Schritt 50 des Flussdiagramms b) in das Flussdiagramm c) eingefügt werden.

Neben dem Verkauf oder der Vermietung von Wertcodeausgebern 5 mit geeigneten Datenbanken 6, insbesondere einem geeigneten Kommunikationsserver mit den für das erfindungsgemässe Verfahren benötigten Hard- und Softwarekomponenten, kann es auch interessant sein, interessierten Betreibern Datenträger mit der nötigen Software zur Steuerung eines geeigneten Kommunikationsservers zu verkaufen oder zu vermieten, so dass das erfindungsgemässe Verfahren durchgeführt werden kann. Ein Betreiber eines Wertcodeausgebers 5 kann das Verfahren gegen entsprechende Bezahlung auch für interessierte Parteien ausführen, die zwar Wertcodes ausgeben aber keinen Wertcodeausgeber 5 selber betreiben wollen.

## Patentansprüche

1. Verfahren zum Verteilen von Wertcodes, die eingelöst werden können um Kredit für kostenpflichtige Dienstleistungen zu erhalten, wobei die Wertcodes generiert und in einer Datenbank (6) eines Wertcodeausgebers (5) gespeichert werden, **dadurch gekennzeichnet,**
**dass** ein Wertcode von einem Besteller durch Übermitteln von Bestellinformationen über einen Bestellkanal (1, 2, 3, 4) an den Wertcodeausgeber (5) bestellt wird, wobei die Bestellinformationen mindestens einen Geldbetragswert umfassen,
**dass** eine Liefernummer über einen Auslieferungskanal (1, 2, 3, 4) an den Besteller übermittelt wird,
**dass** der Empfang der übermittelten Liefernummer vom Besteller durch Übermitteln von mindestens einem Teil der Lieferungsnummer über einen Bestätigungskanal (1, 2, 3, 4) an den Wertcodeausgeber bestätigt wird,
**dass** ein Wertcode über einen Auslieferungskanal (1, 2, 3, 4) an den Besteller übermittelt wird, wobei dieser übermittelte Wertcode in der genannten Datenbank (6) mit dem genannten Geldbetragswert verknüpft ist, und
**dass** dem Besteller ein Geldbetragswert, der mindestens dem mit dem bestätigten Wertcode verknüpften Geldbetragswert entspricht, belastet wird.

2. Verfahren gemäss Anspruch 1, **dadurch gekennzeichnet, dass** genannte Liefernummer in der genannten Datenbank (6) mit dem genannten Wertcode verknüpft ist.

3. Verfahren gemäss einem der Ansprüche 1 oder 2, **dadurch gekennzeichnet, dass** der Empfang des übermittelten Wertcodes durch Übermitteln von Bestätigungsinformationen über einen Bestätigungskanal (1, 2, 3, 4) an den Wertcodeausgeber (5) bestätigt wird, bevor dem Besteller ein Geldbetragswert belastet wird.

4. Verfahren gemäss Anspruch 3, **dadurch gekennzeichnet, dass** der bestätigte Wertcode in der genannten Datenbank (6) erst nach Erhalt der entsprechenden Bestätigung aktiviert wird.

5. Verfahren gemäss einem der Ansprüche 3 bis 4, **dadurch gekennzeichnet, dass** die genannten Bestätigungsinformationen mindestens einen Teil des Wertcodes enthalten.

6. Verfahren gemäss einem der Ansprüche 1 bis 5, **dadurch gekennzeichnet. dass** die genannten Bestellinformationen Angaben enthalten, wie die Kosten für einen bestellten Wertcode dem Besteller belastet werden können.

7. Verfahren gemäss einem der Ansprüche 1 bis 6, **dadurch gekennzeichnet, dass** die genannten Bestellinformationen Angaben enthalten, wie ein bestellter Wertcode dem Besteller übermittelt werden kann.

8. Verfahren gemäss einem der Ansprüche 1 bis 7, **dadurch gekennzeichnet, dass** der genannte Bestellkanal (1, 2, 3) und/oder der genannte Auslieferungskanal (1, 2, 3) jeweils ein Telekommunikationsnetz (12, 22, 32) umfassen.

9. Verfahren gemäss einem der Ansprüche 1 bis 8, **dadurch gekennzeichnet, dass** der genannte Bestellkanal (1, 2, 3, 4) dem genannten Auslieferungskanal (1, 2, 3, 4) entspricht.

10. Verfahren gemäss einem der Ansprüche 3 bis 9, **dadurch gekennzeichnet, dass** der genannte Bestätigungskanal (1, 2, 3, 4) dem genannten Bestellkanal (1, 2, 3, 4) und/oder dem genannten Auslieferungskanal (1, 2, 3, 4) entspricht.

## Claims

1. Method for distribution of value codes which are able to be cashed in to obtain credit for services subject to charges, the value codes being generated and being stored in a database (6) of a value code issuer (5), **characterized in that**
a value code is ordered by a customer through transmission of order data via an order channel (1, 2, 3, 4) to the value code issuer (5), the order data containing at least one monetary amount value,
a delivery number is transmitted to the customer via a delivery channel (1, 2, 3, 4),
the receipt of the transmitted delivery number is confirmed by the customer through transmission to the value card issuer of at least part of the delivery number via a confirmation channel (1, 2, 3, 4),
a value code is transmitted to the customer via a delivery channel (1, 2, 3, 4), this transmitted value code being linked in the said database (6) with the said monetary amount value, and
a monetary amount value corresponding to at least the monetary amount value linked to the confirmed value code is charged to the customer.

2. Method according to claim 1, **characterized in that** said delivery number is linked in the database (6) with the said value code.

3. Method according to one of the claims 1 or 2, **characterized in that** the receipt of the transmitted value code is confirmed through transmission of confirmation data to the value code issuer (5) via a confirmation channel (1, 2, 3, 4) before a monetary amount value is charged to the customer.

4. Method according to claim 3, **characterized in that** the confirmed value code is activated in the said database (6) only after receipt of the respective confirmation.

5. Method according to one of the claims 3 to 4, **characterized in that** said confirmation data contain at least part of the value code.

6. Method according to one of the claims 1 to 5, **characterized in that** said order data contain indications as to how the costs for an ordered value code are able to be charged to the customer.

7. Method according to one of the claims 1 to 6, **characterized in that** said order data contain indications as to how an ordered value code is able to be transmitted to the customer.

8. Method according to one of the claims 1 to 7, **characterized in that** said order channel (1, 2, 3) and/or said delivery channel (1, 2, 3) each comprise a telecommunications network (12, 22, 32).

9. Method according to one of the claims 1 to 8, **characterized in that** said order channel (1, 2, 3, 4) corresponds to said delivery channel (1, 2, 3, 4).

10. Method according to one of the claims 3 to 9, **characterized in that** said confirmation channel (1, 2, 3, 4) corresponds to said order channel (1, 2, 3, 4) and/or to said delivery channel (1, 2, 3, 4).

## Revendications

1. Procédé de répartition de codes de valeurs qui peuvent être convertis afin d'obtenir du crédit pour des services payants, ces codes de valeurs étant générés et mis en mémoire dans une banque de données (6) d'un distributeur de codes de valeurs (5), **caractérisé en ce**
**qu'**un acheteur commande un code de valeur en communiquant des renseignements de commande, par l'intermédiaire d'un canal de commande (1, 2, 3, 4), au distributeur de codes de valeurs (5), ces renseignements de commande comprenant au moins une somme d'argent,
**qu'**un numéro de livraison est communiqué à l'acheteur par l'intermédiaire d'un canal de livraison (1, 2, 3, 4),
**que** l'acheteur accuse réception du numéro de livraison communiqué en en envoyant au moins une partie au distributeur de codes de valeurs, par l'intermédiaire d'un canal d'accusé de réception (1, 2, 3, 4),
**qu'**un code de valeur est communiqué à l'acheteur par l'intermédiaire d'un canal de livraison (1, 2, 3, 4), ce code de valeur ainsi communiqué étant associé, dans la banque de données (6) mentionnée, à la somme d'argent mentionnée, et
**qu'**une somme d'argent, correspondant au moins à celle qui est associée au code de valeur confirmé, est imputée à l'acheteur.

2. Procédé selon la première revendication, **caractérisé en ce que** le numéro de livraison est associé, dans la banque de données (6), au code de valeur en question.

3. Procédé selon la revendication 1 ou 2, **caractérisé en ce que** la réception du code de valeur communiqué est confirmée au distributeur de codes de valeurs (5), grâce à la communication d'informations de confirmation par l'intermédiaire d'un canal de confirmation (1, 2, 3, 4), avant qu'une somme d'argent ne soit imputée à l'acheteur.

4. Procédé selon la revendication 3, **caractérisé en ce que** le code de valeur confirmé n'est rendu actif dans la banque de données (6) qu'après réception de la confirmation correspondante.

5. Procédé selon la revendication 3 ou 4, **caractérisé en ce que** les informations de confirmation comportent au moins une partie du code de valeur.

6. Procédé selon l'une des revendications 1 à 5, **caractérisé en ce que** les renseignements de commande comportent des indications sur la manière dont les frais afférents à un code de valeur commandé peuvent être imputés à l'acheteur.

7. Procédé selon l'une des revendications 1 à 6, **caractérisé en ce que** les renseignements de commande comportent des indications sur la manière dont un code de valeur commandé peut être communiqué à l'acheteur.

8. Procédé selon l'une des revendications 1 à 7, **caractérisé en ce que** le canal de commande (1, 2, 3) ou le canal de livraison (1, 2, 3), ou les deux, comprennent chacun un réseau de télécommunications (12, 22, 32).

9. Procédé selon l'une des revendications 1 à 8, **caractérisé en ce que** le canal de commande (1, 2, 3, 4) correspond au canal de livraison (1, 2, 3, 4).

10. Procédé selon l'une des revendications 3 à 9, **caractérisé en ce que** le canal de confirmation (1, 2, 3, 4) correspond au canal de commande (1, 2, 3, 4) ou au canal de livraison (1, 2, 3, 4), ou aux deux.
